# FASCICULE DE BREVET EUROPEEN

(11) **EP 1 882 821 B1**
(45) Date de publication et mention de la délivrance du brevet: **10.04.2013**
(21) Numéro de dépôt: 07290804.9
(22) Date de dépôt: 28.06.2007
(51) Int. Cl.: F01D 9/04, F04D 29/44

(54) **Ensemble diffuseur-redresseur pour une turbomachine**
Diffusor-Gleichrichter-Anordnung für eine Strömungsmaschine
Nozzle-synchronising ring assembly for a turbomachine

(30) Priorité: 19.07.2006 FR 0606540
(43) Date de publication de la demande: 30.01.2008
(73) Titulaire: SNECMA, 75015 Paris (FR)
(72) Inventeur: Daguenet, Luc Henri Claude, 91100 Corbeil-Essonnes (FR); Gandelot, Sandrine, 92120 Montrouge (FR); Vieillefond, Guy, 91390 Morsang sur Orge (FR)
(74) Mandataire: Ramey, Daniel

(56) Documents cités:
- EP-A- 1 143 108
- WO-A-01/29424
- WO-A-02/06676
- WO-A-2005/042946
- FR-A- 823 442

## Description

L'invention concerne un ensemble diffuseur-redresseur destiné à l'alimentation en air d'une chambre annulaire de combustion dans une turbomachine telle qu'un turboréacteur ou un turbopropulseur d'avion.

Dans certaines réalisations, le dernier étage du compresseur d'alimentation dans une turbomachine est un étage centrifuge dont la sortie est entourée par un diffuseur annulaire radial. Ce diffuseur est raccordé en sortie à un redresseur annulaire cylindrique qui alimente une chambre annulaire de combustion.

La fabrication du diffuseur radial et du redresseur cylindrique pose un certain nombre de problèmes. En effet, dans les solutions qui ont été déjà proposées, une partie au moins de l'ensemble diffuseur-redresseur est taillée dans la masse, l'autre partie étant réalisée de fonderie ou par mécano-soudure et fixée par boulonnage à la première partie ou à un carter.

.Le document WO-A-2005/042946 décrit un diffuseur dont une partie est formée par usinage d'un bloc de matière, et le document WO-A-2002/06676 décrit un diffuseur dont une partie est obtenue de fonderie ou est réalisée par projection plasma.

La faible épaisseur des aubes et des flasques et viroles du diffuseur et du redresseur fait qu'il est très difficile de réaliser ces pièces par taillage dans la masse, ce qui a pour conséquence que les taux de rebut en fabrication peuvent être élevés et que les sociétés ou les personnes capables de faire ces fabrications sont très peu nombreuses, de sorte qu'il peut se poser des problèmes d'approvisionnement et que le coût de ces pièces est élevé.

L'invention a notamment pour but d'apporter une solution simple, satisfaisante et économique à ce problème.

Elle propose à cet effet un ensemble diffuseur-redresseur destiné à l'alimentation en air d'une chambre annulaire de combustion dans une turbomachine, cet ensemble comprenant un diffuseur radial comportant deux flasques annulaires reliés par des aubes à inclinaison sensiblement hélicoïdale, et un redresseur annulaire cylindrique agencé en sortie du diffuseur et comportant deux viroles cylindriques en tôle et des aubes sensiblement radiales fixées par brasure aux viroles cylindriques, caractérisé en ce que les flasques annulaires du diffuseur sont formés de tôles auxquelles les aubes sont fixées par brasure.

Il en résulte des avantages substantiels en termes de simplicité de fabrication et de coût. L'utilisation de tôles pour les flasques du diffuseur et les viroles du redresseur permet d'éviter des usinages complexes et des approvisionnements de matière importants, et réduit également la masse totale, le coût global étant inférieur d'au moins 30% à celui du même ensemble réalisé au moyen des technologies actuelles.

Selon une autre caractéristique de l'invention, les tôles du diffuseur et du redresseur comportent des ajours dans lesquels les extrémités des aubes sont engagées et brasées.

Avantageusement, les extrémités des aubes sont brasées sur tout leur pourtour dans les ajours des flasques du diffuseur.

Dans un mode de réalisation préféré de l'invention, les ajours des tôles sont formés par découpe laser.

Les extrémités radialement internes des flasques annulaires du diffuseur sont reliées à des parois annulaires qui sont équipées de brides de fixation et qui se trouvent radialement à l'intérieur des aubes du diffuseur, de sorte qu'elles ne gênent pas la brasure des extrémités des aubes dans les ajours formés dans les flasques.

Les aubes du diffuseur et celles du redresseur peuvent être réalisées en usinage électrochimique ECM.

L'invention sera mieux comprise et d'autres caractéristiques, détails et avantages de celles-ci apparaîtront plus clairement à la lecture de la description qui suit, faite à titre d'exemple en référence aux dessins annexés dans lesquels :
- la figure 1 est une demi-vue schématique en coupe axiale d'un ensemble diffuseur-redresseur selon l'invention ;

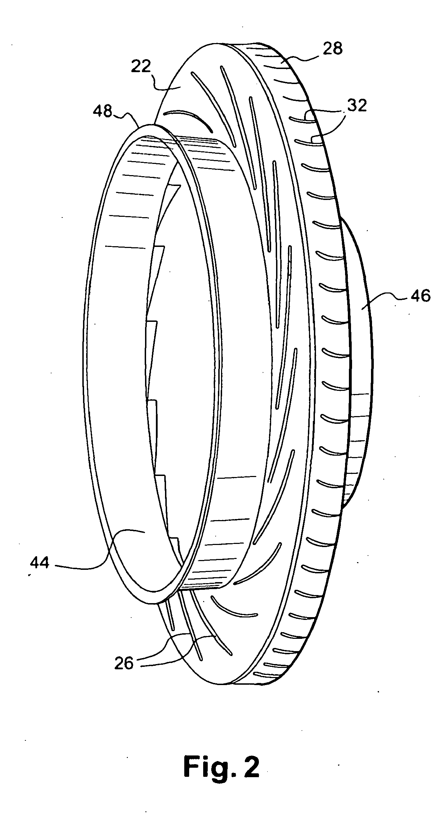

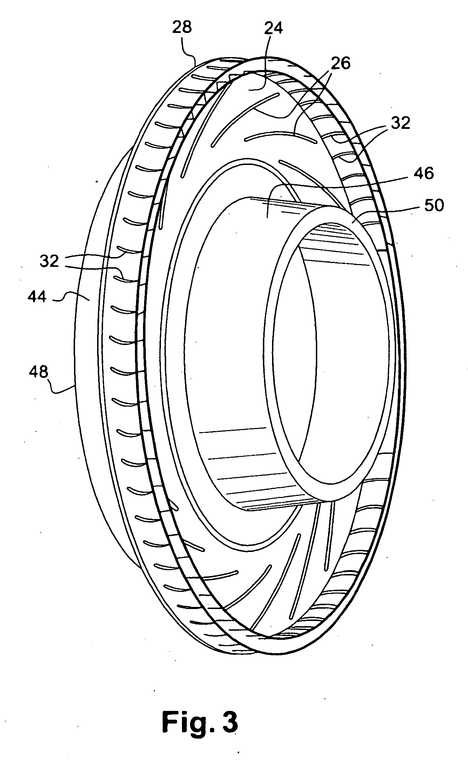

- les figures 2 et 3 sont des vues schématiques en perspective de cet ensemble ; et

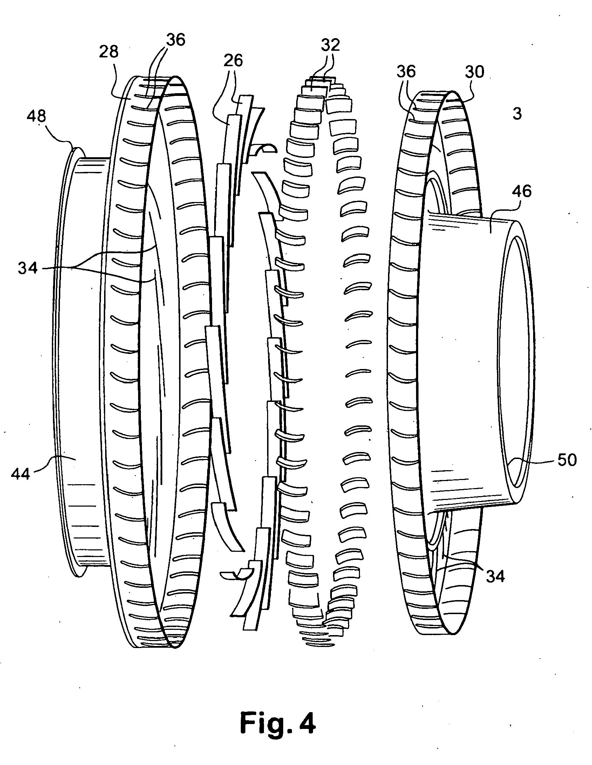

- la figure 4 est une vue schématique en perspective éclatée de cet ensemble.

L'ensemble diffuseur-redresseur 10 représenté dans les dessins annexés comprend un diffuseur annulaire radial 12 raccordé en sortie à un redresseur annulaire cylindrique 14, cet ensemble étant destiné à être monté en sortie du dernier étage centrifuge 16 d'un compresseur d'une turbomachine telle qu'un turboréacteur ou turbopropulseur d'avion, l'entrée 18 du diffuseur 12 étant radialement alignée avec la sortie de l'étage centrifuge 16, la sortie du redresseur 14 alimentant en air une chambre annulaire de combustion 20, d'une façon bien connue de l'homme du métier.

Selon l'invention, le diffuseur 12 comporte un flasque annulaire amont 22 et un flasque annulaire aval 24, qui sont parallèles et s'étendent annulairement autour de l'axe de rotation du compresseur et qui sont reliés entre eux par des aubes 26 à orientation sensiblement hélicoïdale autour de l'axe de rotation du compresseur.

Le redresseur 14 comporte deux viroles cylindriques respectivement externe 28 et interne 30, qui sont coaxiales et disposées l'une à l'intérieur de l'autre, et qui sont reliées par des aubes 32 sensiblement radiales.

Les flasques annulaires 22 et 24 du diffuseur et les viroles cylindriques 28 et 30 du redresseur sont formés de tôles auxquelles les extrémités des aubes 26 et 32, respectivement, sont fixées par brasure.

A cet effet, les flasques annulaires 22 et 24 du diffuseur comportent des ajours 34 à la forme des extrémités amont des aubes 26, ces ajours étant formés par découpe laser. De même, les viroles cylindriques 28 et 30 du redresseur comportent des ajours 36 formés par découpes laser et qui sont à la forme des bords radialement externes et radialement internes des aubes 32.

Cela permet d'engager les extrémités des aubes 26, 32 dans les ajours 34, 36, pour les assembler par brasure sur tout leur pourtour, les bords des aubes pouvant se trouver légèrement en saillie sur les faces extérieures des flasques annulaires 22, 24 ou des viroles 28, 30, respectivement, ou venant juste affleurer les faces extérieures des flasques annulaires 22, 24 ou des viroles 28, 30.

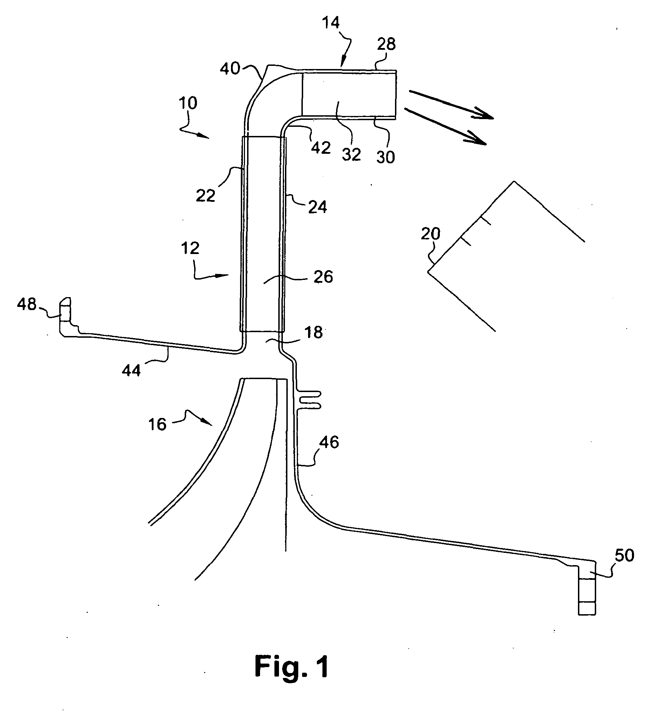

Comme représenté en figure 1, le flasque annulaire amont 22 du diffuseur peut être raccordé à la virole cylindrique extérieure 28 du redresseur par une pièce de liaison annulaire 40, et le flasque annulaire aval 24 du diffuseur peut être raccordé à la virole cylindrique interne du redresseur par une pièce de liaison annulaire 42, ces pièces de liaison 40 et 42 étant en tôle et fixées aux extrémités des flasques annulaires et des viroles par soudure TIG (Tungsten Inert Gas).

Les extrémités radialement internes des flasques annulaires 22 et 24 sont raccordées à des parois annulaires amont 44 et aval 46, respectivement, également par soudure TIG. Les parois annulaires 44 et 46 sont équipées à leur extrémité libre d'une bride de fixation 48, 50, fixée par soudure TIG.

De façon à ce que les aubes 26 du diffuseur puissent bien être fixées sur tout le long de leur pourtour aux flasques annulaires 22 et 24, les parois annulaires 44 et 46 sont raccordées aux flasques annulaires 22, 24, respectivement, radialement à l'intérieur des bords inférieurs des aubes 26 et non à l'extérieur de ces bords inférieurs comme cela est en général le cas dans la technique antérieure.

La brasure des aubes sur tout le long de leur pourtour garantit une meilleure tenue mécanique et permet un contrôle adéquat des brasures.

L'utilisation de tôles pour former les flasques annulaires du diffuseur et les viroles du redresseur, permet un gain de masse relativement important, simplifie beaucoup la fabrication de l'ensemble diffuseur-redresseur 10 et abaisse son coût d'au moins 30%. Par ailleurs, on évite ainsi toutes les difficultés d'approvisionnement et de recherche de fournisseurs que l'on rencontrait dans la technique antérieure.

## Revendications

1. Ensemble diffuseur-redresseur destiné à l'alimentation en air d'une chambre annulaire de combustion dans une turbomachine, cet ensemble comprenant un diffuseur radial (12) comportant deux flasques annulaires (22, 24) reliés par des aubes (26) à inclinaison sensiblement hélicoïdale, et un redresseur annulaire (14) agencé en sortie du diffuseur et comportant deux viroles cylindriques (28, 30) en tôle et des aubes (32) sensiblement radiales fixées par brasure aux viroles cylindriques, **caractérisé en ce que** les flasques annulaires (22, 24) du diffuseur sont formés de tôles auxquelles les aubes (26) sont fixées par brasure.

2. Ensemble selon la revendication 1, **caractérisé en ce que** les tôles du diffuseur et du redresseur comportent des ajours (34, 36) dans lesquels les extrémités des aubes (26, 32) sont engagées et brasées.

3. Ensemble selon la revendication 2, **caractérisé en ce que** les extrémités des aubes sont brasées sur tout leur pourtour dans les ajours des flasques et des viroles.

4. Ensemble selon la revendication 2 ou 3, **caractérisé en ce que** les ajours (34, 36) des tôles sont formés par découpe laser.

5. Ensemble selon l'une des revendications précédentes **caractérisé en ce que** les extrémités radialement internes des flasques annulaires (22, 24) du diffuseur sont reliées à des parois annulaires (44, 46) qui sont équipées de brides de fixation (48, 50) et qui se trouvent radialement à l'intérieur des aubes (26) du diffuseur.

6. Ensemble selon la revendication 5, **caractérisé en ce que** les flasques annulaires (22, 24) du diffuseur sont fixés par soudage TIG aux parois annulaires (44, 46).

7. Ensemble selon l'une des revendications précédentes **caractérisé en ce que** les flasques radiaux (22, 24) du diffuseur sont reliés aux viroles cylindriques (28, 30) du redresseur par des pièces annulaires de raccordement (40, 42) fixées par soudage TIG aux extrémités des flasques et des viroles.

8. Ensemble selon l'une des revendications précédentes, **caractérisé en ce que** les aubes (26, 32) sont réalisées en usinage ECM.

9. Turbomachine, telle qu'un turboréacteur ou turbopropulseur d'avion, **caractérisée en ce qu'**elle comprend un ensemble redresseur-diffuseur (10) selon l'une des revendications précédentes.

## Claims

1. Diffuser/guide vane assembly intended for supplying air to an annular combustion chamber in a turbomachine, this diffuser/guide vane assembly comprising a radial diffuser (12) having two annular flanges (22, 24), which are joined by vanes (26) with a substantially helical inclination, and an annular guide vane assembly (14) placed at the outlet of the diffuser and having two cylindrical shelves (28, 30) formed by metal sheets and substantially radial vanes (32)fastened by brazing to the cylindrical shelves, **characterized in that** the annular flanges (22, 24) of the diffuser are formed by metal sheets to which the vanes (26) are fastened by brazing.

2. Diffuser/guide vane assembly as claimed in claim 1, **characterized in that** the metal sheets of the diffuser and of the guide vane assembly include apertures (34, 36) into which the ends of the vanes (26, 32)are fitted and brazed.

3. Diffuser/guide vane assembly as claimed in claim 2, **characterized in that** the ends of the vanes are brazed over their entire perimeter in the apertures of the flanges and those of the shelves.

4. Diffuser/guide vane assembly as claimed in claim 2 or 3, **characterized in that** the apertures (34, 36) of the metal sheets are formed by lasing cutting.

5. Diffuser/guide vane assembly as claimed in one of the preceding claims, **characterized in that** the radially internal ends of the annular flanges (22, 24) of the diffuser are joined to annular walls (44, 46) that are equipped with fastening rims (48, 50) and which lie radially to the inside of the vanes (26) of the diffuser.

6. Diffuser/guide vane assembly as claimed in claim 5, **characterized in that** the annular flanges (22, 24) of the diffuser are fastened by TIG welding to the annular walls (44, 46).

7. Diffuser/guide vane assembly as claimed in one of the preceding claims, **characterized in that** the radial flanges (22, 24) of the diffuser are joined to the cylindrical shelves (28, 30) of the guide vane assembly via annular connecting pieces (40, 42) fastened by TIG welding to the ends of the flanges and the ends of the shelves.

8. Diffuser/guide vane assembly as claimed in one of the preceding claims, **characterized in that** the vanes (26, 32) are produced by ECM machining.

9. Turbomachine, such as an aircraft turbojet or turboprop engine, **characterized in that** it includes a diffuser/guide vane assembly (10) as claimed in one of the preceding claims.

## Patentansprüche

1. Diffusor-Gleichrichter-Anordnung, die zur Versorgung einer ringförmigen Brennkammer bei einer Turbomaschine mit Luft bestimmt ist, wobei diese Anordnung einen radialen Diffusor (12) aufweist, der zwei ringförmige Flansche (22, 24) enthält, die über Schaufeln (26) mit im wesentlichen spiralförmiger Schrägstellung miteinander verbunden sind, sowie einen ringförmigen Gleichrichter (14), der am Auslass des Diffusors angeordnet ist und zwei zylindrische Ringe (28, 30) aus Blech enthält, und im wesentlichen radial verlaufende Schaufeln (32), die mit den zylindrischen Ringen verschweißt sind, **dadurch gekennzeichnet, dass** die ringförmigen Flansche (22, 24) des Diffusors aus Blechen gebildet sind, mit denen die Schaufeln (26) verschweißt sind.

2. Anordnung nach Anspruch 1, **dadurch gekennzeichnet, dass** die Bleche des Diffusors und des Gleichrichters Durchbrüche (34, 36) aufweisen, in welchen die Enden der Schaufeln (26, 32) eingreifen und verschweißt sind.

3. Anordnung nach Anspruch 2, **dadurch gekennzeichnet, dass** die Enden der Schaufeln über ihren gesamten Umfang in den Durchbrüchen der Flansche und der Ringe verschweißt sind.

4. Anordnung nach Anspruch 2 oder 3, **dadurch gekennzeichnet, dass** die Durchbrüche (34, 36) der Bleche durch Laserschneiden ausgebildet sind.

5. Anordnung nach einem der vorangehenden Ansprüche, **dadurch gekennzeichnet, dass** die radial inneren Enden der ringförmigen Flansche (22, 24) des Diffusors mit ringförmigen Wandungen (44, 46) verbunden sind, die mit Befestigungsbundringen (48, 50) versehen sind und sich radial innerhalb der Schaufeln (26) des Diffusors befinden.

6. Anordnung nach Anspruch 5, **dadurch gekennzeichnet, dass** die ringförmigen Flansche (22, 24) des Diffusors durch WIG-Verschweißung an den ringförmigen Wandungen (44, 46) befestigt sind.

7. Anordnung nach einem der vorangehenden Ansprüche, **dadurch gekennzeichnet, dass** die radial verlaufenden Flansche (22, 24) des Diffusors mit den zylindrischen Ringen (28, 30) des Gleichrichters über ringförmige Anschlussteile (40, 42) verbunden sind, die durch WIG-Verschweißung an den Enden der Flansche und der Ringe befestigt sind.

8. Anordnung nach einem der vorangehenden Ansprüche, **dadurch gekennzeichnet, dass** die Schaufeln (26, 32) durch elektrochemische Bearbeitung ausgebildet sind.

9. Turbomaschine bzw. Turbotriebwerk, wie etwa Turbostrahltriebwerk oder Turbopropellertriebwerk für Flugzeuge, **dadurch gekennzeichnet, dass** sie bzw. es eine Gleichrichter-Diffusor-Anordnung (10) nach einem der vorangehenden Ansprüche aufweist.
